# EUROPÄISCHE PATENTSCHRIFT

(11) **EP 3 938 240 B1**
(45) Veröffentlichungstag und Bekanntmachung des Hinweises auf die Patenterteilung: **05.10.2022**
(21) Anmeldenummer: 20712490.0
(22) Anmeldetag: 13.03.2020
(51) Int. Cl.: B60N 2/90, B60N 2/02

(54) **UNTERSCHENKELSTÜTZEINRICHTUNG FÜR EINEN FAHRZEUGSITZ, FAHRZEUGSITZ**
LOWER LEG SUPPORT DEVICE FOR A VEHICLE SEAT, AND VEHICLE SEAT
DISPOSITIF REPOSE-JAMBES POUR UN SIÈGE DE VÉHICULE ET SIÈGE DE VÉHICULE

(30) Priorität: 15.03.2019 DE 102019203553
(43) Veröffentlichungstag der Anmeldung: 19.01.2022
(73) Patentinhaber: VOLKSWAGEN AKTIENGESELLSCHAFT, 38440 Wolfsburg (DE)
(72) Erfinder: STAHL, Arne, 38518 Gifhorn (DE); BRÜCKNER, Tim, 38126 Braunschweig (DE); KÖHLER, Matthias, 38527 Meine (DE); BUSCH, Christian, 38112 Braunschweig (DE)
(86) Internationale Anmeldenummer: PCT/EP2020/056749
(87) Internationale Veröffentlichungsnummer: WO 2020/187716

(56) Entgegenhaltungen:
- DE-A1-102018 106 403
- US-A1- 2005 173 963

## Beschreibung

Die Erfindung betrifft eine Unterschenkelstützeinrichtung für einen Fahrzeugsitz, mit einem dem Fahrzeugsitz zuordenbaren Träger und mit einer an dem Träger verlagerbar angeordneten Unterschenkelstütze, die zwischen einer Nicht-Gebrauchsposition und einer sich in Längserstreckung vorgelagerten Gebrauchsposition verlagerbar ist, wobei die Unterschenkelstütze zumindest zwei Stützteile aufweist, die relativ zueinander bewegbar sind, um eine Unterschenkelauflagefläche der Unterschenkelstütze zu vergrößern oder zu verkleinern.

Weiterhin betrifft die Erfindung einen Fahrzeugsitz für ein Kraftfahrzeug, mit einem Sitzteil, mit einer dem Sitzteil zugeordneten Rückenlehne und mit einer an dem Sitzteil angeordneten Unterschenkelstützeinrichtung.

Unterschenkelstützeinrichtungen sind aus dem Stand der Technik bereits bekannt. So offenbart beispielsweise die Offenlegungsschrift DE 10 2010 030 553 eine Unterschenkelstützeinrichtung für einen Fahrzeugsitz, die ein verschwenkbar gelagertes Stützteil aufweist, das aus einer im Wesentlichen vertikal ausgerichteten Nicht-Gebrauchsstellung in eine ausgeschwenkte horizontal ausgerichtete Gebrauchsstellung verschwenkbar ist. Aus der Offenlegungsschrift DE 10 2018 106 403 A1 ist eine gattungsgemäße Unterschenkelstützeinrichtung bekannt, bei welcher ebenfalls ein Stützteil aus einer Nicht-Gebrauchsstellung in eine Gebrauchsstellung verschwenkbar ist, wobei die Unterschenkelstütze mehrteilig ausgebildet ist. Dazu sind mehrere in Längserstreckung hintereinanderliegende Stützteile gelenkig miteinander verbunden, sodass diese nacheinander in die Gebrauchsposition verschwenkbar sind, wodurch die Unterschenkelstütze in ihrer Längserstreckung verlängerbar ist. Aus der Offenlegungsschrift US 2005 173 963 A1 ist eine weitere gattungsgemäße Unterschenkelstützeinrichtung bekannt.

Der Erfindung liegt die Aufgabe zugrunde, eine verbesserte Unterschenkelstützeinrichtung zu schaffen, die den Benutzungskomfort für den Benutzer erhöht.

Die der Erfindung zugrundeliegende Aufgabe wird durch eine Unterschenkelstützeinrichtung mit den Merkmalen des Anspruchs 1 gelöst. Diese hat den Vorteil, dass dem Benutzer eine komfortablere Auflagefläche zur Verfügung steht, die eine vergrößerte Freiheit bei der Position seiner Beine auf der Unterschenkelstütze bietet. Erfindungsgemäß ist dazu vorgesehen, dass die Stützteile quer zur Längserstreckung zueinander verlagerbar sind, sodass sie durch ihre Verlagerung die Breite der Unterschenkelauflagenfläche vergrößern oder verkleinern. Durch eine Verkleinerung der Unterschenkelauflagefläche wird beispielsweise erreicht, dass der Benutzer leichter seinen Fuß von der Unterschenkelstütze nehmen und auf dem Boden abstellen kann. Es verbleibt mehr Freiraum im Fußbereich, um beispielsweise auch auf dem Boden liegende Gegenstände oder dergleichen zu greifen. Durch das Verbreitern der Unterschenkelauflagenfläche kann der Benutzer seine Beine bequem auf der Unterschenkelstütze ablegen, auch wenn sie nicht dicht beieinander oder direkt aneinander anliegen. Dadurch wird der Benutzungskomfort der Unterschenkelauflagestütze vergrößert. Außerdem besteht dadurch die Möglichkeit, dass durch die Verkleinerung der Auflagenbreite weniger Bauraum für das Verstauen der Unterschenkelstütze in der Nicht-Gebrauchsposition notwendig ist, wodurch die Unterschenkelstütze leichter und bauraumsparend in den Fahrzeugsitz integrierbar ist.

Gemäß einer bevorzugten Weiterbildung der Erfindung ist ein erstes der Stützteile verlagerbar an dem Träger und zumindest ein zweites der Stützteile verlagerbar an dem ersten Stützteil angeordnet. Das erste Stützteil stellt somit die Verbindung zu dem Träger dar und erlaubt das Verstellen der Unterschenkelstütze von der Gebrauchsposition in die Nicht-Gebrauchsposition und umgekehrt. Das zweite Stützteil ist an dem ersten Stützteil verlagerbar, sodass es zum einen mit dem ersten Stützteil mitverlagert wird, und sodass es zum anderen einfach relativ zu dem ersten Stützteil verlagerbar ist, um die Unterschenkelauflagenfläche zu vergrößern oder zu verkleinern.

Insbesondere sind an dem ersten Stützteil zwei zweite Stützteile verlagerbar an voneinander abgewandten Seiten des ersten Stützteils angeordnet. Dadurch wird die Unterschenkelauflagefläche durch das Verlagern beider Stützteile vergrößert oder verkleinert. So ist es beispielsweise denkbar, zum Vergrößern der Unterschenkelauflagenfläche nur eines der beiden Stützteile zu verlagern. Bevorzugt sind die Stützteile jedoch derart aneinander gekoppelt, dass stets beide zweite Stützteile verlagert werden, sodass eine symmetrische Veränderung der Unterschenkelauflagenfläche gewährleistet ist.

Gemäß einer bevorzugten Ausführungsform der Erfindung ist das jeweils zweite Stützteil an dem ersten Stützteil von einer eingeschobenen Verstauposition in eine ausgezogene Nutzposition und umgekehrt verschiebbar. In der ausgezogenen Nutzposition verbreitert das zweite Stützteil jeweils die Unterschenkelauflagefläche, während es in der eingeschobenen Verstauposition die Auflagenfläche verschmälert. Durch die verschiebbare Anordnung des oder der zweiten Stützteile an dem ersten Stützteil ist eine einfache und robuste Mechanik geboten, die die Vergrößerung oder Verkleinerung der Unterschenkelauflagenfläche ermöglicht.

Vorzugsweise ist das zweite Stützteil an dem ersten Stützteil jeweils durch eine Schienenführung gelagert. Die Schienenführung ist kostengünstig darstellbar und erlaubt eine einfache Bedienung der Unterschenkelstützeinrichtung. Insbesondere wird die Schienenführung durch das erste und zweite Stützteil ausgebildet, indem das zweite Stützteil formschlüssig an dem ersten Stützteil geführt ist. Insbesondere ist das zweite Stützteil derart ausgebildet, dass es das erste Stützteil zumindest bereichsweise zumindest in der Verstauposition einhaust, sodass das zweite Stützteil das erste Stützteil in der Verstauposition zumindest bereichsweise überdeckt. In der ausgezogenen Nutzposition gibt das zweite Stützteil dann das erste Stützteil zumindest im Wesentlichen frei, sodass die Gesamt-Unterschenkelauflagenfläche durch das erste und das zweite Stützteil gebildet wird.

Vorzugsweise weist die Unterschenkelstützeinrichtung zumindest einen ansteuerbaren Aktuator auf, der dem zweiten Stützteil zu dessen Verlagerung zugeordnet ist. Dadurch ist ein automatisiertes Verschieben des zweiten Stützteils in vorteilhafter Weise gewährleistet. Der Aktuator ist insbesondere als elektromotorischer, pneumatischer und/oder hydraulischer Aktuator ausgebildet.

Vorzugsweist ist der Aktuator durch ein Getriebe mit den zwei Stützteilen zu deren Verlagerung gekoppelt, sodass durch einen einzelnen Aktuator beide zweite Stützteile vorteilhaft verlagerbar sind.

Insbesondere ist das erste Stützteil längsverschieblich gelagert, sodass der Benutzer die Position des ersten Stützteils beziehungsweise der Unterschenkelstütze optimal an seine Bedürfnisse anpassen kann.

Besonders bevorzugt ist dem ersten Stützteil ein ansteuerbarer Aktuator zu seiner Längsverschiebung zugeordnet, der ein zu dem zuvor genannten Aktuator separater Aktuator sein kann oder durch den bereits genannten Aktuator gebildet wird. Dadurch ist ein automatisches Einstellen des ersten Stützteils in seiner Längsverschiebung ermöglicht.

Besonders bevorzugt ist der Aktuator fest mit dem ersten Stützteil verbunden sowie mit einer Spindelstange gekoppelt, die einendig an dem Träger befestigt ist, wobei der Aktuator insbesondere eine Spindelmutter aufweist und durch seine Ansteuerung entlang der Spindelstange verschiebbar ist. Durch das Ansteuern des Aktuators wird dieser dann entlang der Spindelstange, die an dem Träger befestigt ist, verschoben, wobei aufgrund seiner festen Verbindung zu dem ersten Stützteil das erste Stützteil mitverschoben wird. Hierdurch ist die zuvor genannte Längsverschiebung des ersten Stützteils durch den Aktuator auf einfache Art und Weise gewährleistet.

Bevorzugt ist die Spindelstange anderendig mit zumindest einer mit einem der zweiten Stützteile, insbesondere gelenkig, vorzugsweise durch ein Gelenk direkt verbunden, verbundenen Koppelstange gelenkig verbunden, wobei die Koppelstange mit der Spindelstange in der eingeschobenen Verstauposition einen spitzen Winkel einschließt. Weil das zweite Stützteil querverschieblich an dem ersten Stützteil gelagert ist, und das erste Stützteil fest mit dem entlang der Spindelstange verschiebbaren Aktuator verbunden ist, bewirkt die Längsverschiebung des ersten Stützteils entlang der Spindelstange, dass die Koppelstange das zweite Stützteil beim Verschieben des ersten Stützteils von dem Träger weg nach außen verschiebt, wodurch die Unterschenkelauflagenfläche vergrößert wird. Damit wird durch einen einzigen Aktuator bewirkt, dass das erste Stützteil längsverschoben und das zweite Stützteil dazu querverschoben wird, um die Auflagefläche zu vergrößern oder zu verkleinern. Durch den spitzen Winkel wird gewährleistet, dass ausgehend von der Verstauposition ein Aufspreizen der Koppelstange beziehungsweise ein Vergrößern dieses Winkels durch das Verschieben des ersten Stützteils von dem Träger weg stets möglich ist und keine Selbsthemmung stattfindet. Zweckmäßigerweise sind beide zweite Stützteile über eine entsprechende Koppelstange mit dem Ende der Spindelstange gekoppelt, sodass beide Stützteile mitverschoben werden.

Vorzugsweise ist das erste Stützteil an dem Träger verschwenkbar gelagert, sodass die Unterschenkelstütze insgesamt von einer insbesondere im Wesentlichen horizontal ausgebildeten Nicht-Gebrauchsposition in die insbesondere vertikal oder zumindest geneigt ausgerichtete Gebrauchsposition verschwenkbar ist.

Vorzugsweise ist dem Träger ein Aktuator zum Verschwenken des ersten Stützteils zugeordnet, sodass ein automatisiertes Verschwenken des ersten Stützteils von der Gebrauchsposition in die Nicht-Gebrauchsposition oder umgekehrt ermöglicht ist. Optional beziehungsweise alternativ dazu ist die Unterschenkelstütze mit der Sitzverstellungseinrichtung des Fahrzeugsitzes koppelbar, sodass bei einer Veränderung der Sitzlageposition, beispielsweise von einer aufrechten Sitzposition in eine Liegeposition, die Unterschenkelstütze automatisch in die Gebrauchsposition verlagert wird. Hierzu ist beispielsweise eine mechanische Kopplung der Unterschenkelstützeinrichtung mit dem Fahrzeugsitz beziehungsweise dessen Sitzverstelleinrichtung herstellbar.

Der erfindungsgemäße Fahrzeugsitz mit den Merkmalen des Anspruchs 14 zeichnet sich durch die erfindungsgemäße Ausbildung der Unterschenkelstützeinrichtung aus. Es ergeben sich dadurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: einen Fahrzeugsitz in einer vereinfachten Seitenansicht,
- Figur 2A: eine perspektivische Darstellung einer vorteilhaften Unterschenkelstützeinrichtung des Fahrzeugsitzes gemäß einer ersten Betriebsstellung und
- Figur 2B: die Unterschenkelstützeinrichtung aus Figur 2A in einer weiteren Betriebsstellung.

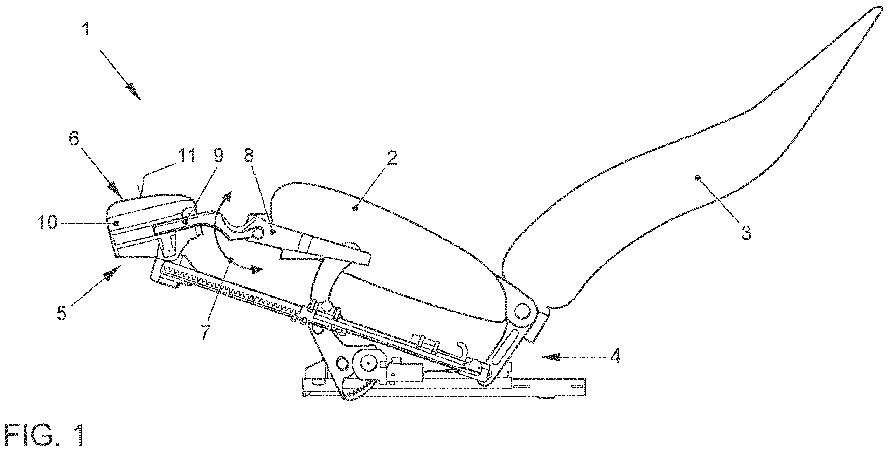

Figur 1 zeigt in einer vereinfachten Seitenansicht einen vorteilhaften Fahrzeugsitz 1 für ein hier nicht näher dargestelltes Kraftfahrzeug. Der Fahrzeugsitz 1 weist einen Fahrzeugsitz 1 mit einer daran verlagerbar angeordneten Rückenlehne 3 auf. Das Sitzteil ist durch ein Sitzgestell 4 auf einem hier nicht näher dargestellten Fahrzeugboden des Kraftfahrzeugs befestigbar. Das Sitzgestell 4 ist dazu ausgebildet, dass der Fahrzeugsitz 1 von einer aufrechten Sitzposition, in welcher das Sitzteil 2 im Wesentlichen horizontal und die Rückenlehne 3 im Wesentlichen vertikal ausgerichtet sind, in die in Figur 1 gezeigte Liegeposition verlagerbar ist, in welcher die Rückenlehne 3 und das Sitzteil 2 derart geneigt sind, dass sich eine bequeme Liegeposition für den Benutzer des Fahrzeugsitzes 1 ergibt. Ein derartiger Fahrzeugsitz 1 ist insbesondere für Kraftfahrzeuge von Vorteil, die einen autonomen Fahrbetrieb erlauben.

Zur Erhöhung des Benutzungskomforts, insbesondere in der dargestellten Liegeposition, weist der Fahrzeugsitz 1 außerdem eine Unterschenkelstützeinrichtung 5 auf, die den Unterschenkeln eines den Fahrzeugsitz 1 benutzenden Benutzers zugeordnet ist. Die Unterschenkelstützeinrichtung 5 weist eine Unterschenkelstütze 6 auf, die zwischen einer im Wesentlichen unterhalb des Sitzteils 2 befindlichen und vertikal ausgerichteten Nicht-Gebrauchsstellung und der in Figur 1 gezeigten in Längserstreckung des Fahrzeugsitzes vor dem Sitzteil 2 vorgelagerten und nahezu horizontal ausgerichteten Gebrauchsstellung verlagerbar ist, wie durch einen Doppelpfeil 7 angedeutet. Dazu ist die Unterschenkelstütze 6 an einem dem Sitzteil 2 zugeordneten Träger 8 verschwenkbar gelagert.

Dabei weist die Unterschenkelstütze 6 ein erstes Stützteil 9 auf, das verschwenkbar an dem Träger 8 gelagert ist. An dem ersten Stützteil 9 sind zwei zweite Stützteile 10 derart verschiebbar gelagert, dass sie einen von der Unterschenkelstütze 6 gebildete Unterschenkelauflagefläche 11 vergrößern und verkleinern können.

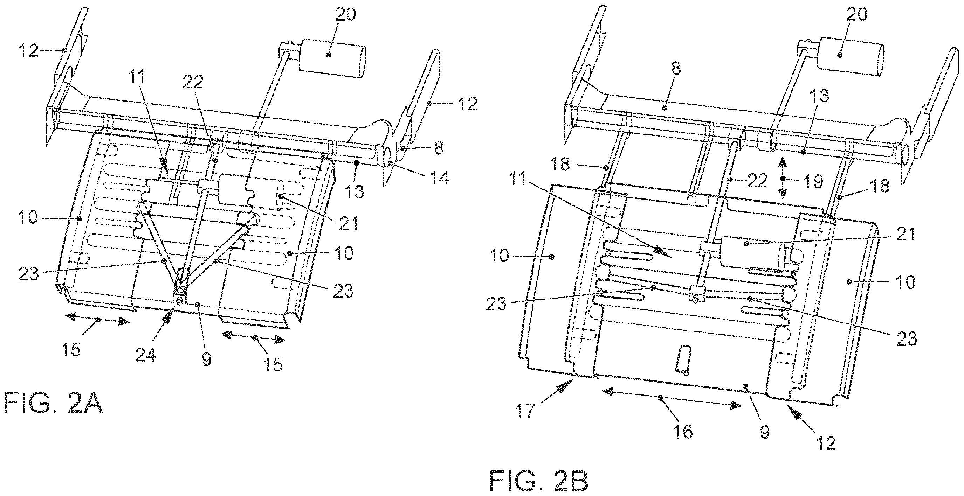

Hierzu zeigen Figuren 2A und 2B jeweils eine perspektivische Draufsicht auf die Unterschenkelstützeinrichtung in unterschiedlichen Betriebszuständen.

Der Träger 8 ist U-förmig ausgebildet, wobei seine einander gegenüberliegenden Längsschenkel in einer Führungsschiene 12 des Sitzteils 2 verschiebbar gelagert sind, sodass der Träger 8 in Längserstreckung des Sitzteils 2 verschiebbar an diesem gelagert ist. An dem freien Ende des Trägers 8 ist das erste Stützteil 9 verschwenkbar gelagert. Dazu weist das Stützteil 9 einen bolzenförmigen Quersteg 13 auf, der direkt oder unter Zwischenschaltung eines Wälzkörperlagers in Bolzenaufnahmen 14 des Trägers 8 drehbar gelagert ist.

Das Stützteil 9 weist eine zumindest im Wesentlichen rechteckförmige Grundfläche auf, wobei seinen Längsseiten, die sich also parallel zur Längserstreckung des Fahrzeugsitzes 1 erstrecken, ist jeweils ein zweites Stützteil 10 zugeordnet. In der in Figur 2A gezeigten Verstauposition der Stützteile 10 hausen diese das erste Stützteil 9 bereichsweise ein. Dazu überdecken die Stützteile 10 das Stützteil 9 bereichsweise ausgehend von dessen Seitenrändern. Dabei sind die Stützteile 10 insbesondere direkt an dem Stützteil 9 derart verschiebbar gelagert, dass sie quer zur Längserstreckung des Stützteils 9 an diesem verschiebbar sind, wie durch Doppelpfeile 15 in Figur 2A angezeigt. Werden die Stützteile 10 von der in Figur 2 gezeigten Verstauposition in eine Nutzposition, wie sie in Figur 2B gezeigt ist, ausgezogen, also voneinander wegbewegt, gemäß einem Doppelpfeil 16 in Figur 2B, so geben die Stützteile 10 das Stützteil 9 bereichsweise frei, wodurch die gemeinsam durch die Stützteile 9 und 10 zur Verfügung gestellte Unterschenkelauflagefläche 11 vergrößert, insbesondere verbreitert wird.

Durch die vorteilhafte Unterschenkelstützeinrichtung 5 ist es somit möglich, den Benutzungskomfort dadurch zu erhöhen, dass die Breite der Unterschenkelstütze 6 an die Bedürfnisse des Benutzers anpassbar ist. Insbesondere wird die Querverschieblichkeit der zweiten Stützteile 10 durch jeweils eine Schienenführung 17, die zwischen den Stützteilen 10 und dem Stützteil 9 ausgebildet ist, gewährleistet. Insbesondere wird die jeweilige Schienenführung 17 direkt durch die Stützteile 9 und 10 ausgebildet, sodass deren Formgebung die formschlüssige Schienenführung bildet. Dazu ist beispielsweise das jeweils zweite Stützteil 10 mit einem C-förmigen Querschnitt versehen, durch welchen das Stützteil 9 formschlüssig umfassbar ist, sodass durch das Zusammenwirken des auf das Stützteil 9 aufgeschobenen zweiten Stützteils 10 die Schienenführung 17 gebildet ist.

Vorzugsweise ist das Stützteil 9 außerdem längsverschieblich an dem Träger 8 gelagert. Dazu ist gemäß dem vorliegenden Ausführungsbeispiel vorgesehen, dass das Stützteil 9 auf Stützstreben 18 längsverschieblich gelagert ist, die mit dem Quersteg 13 fest verbunden sind. Dadurch ist das Stützelement 9 indirekt an dem Träger 8 durch die verschwenkbare Lagerung der Stützstreben 18 gelagert. Außerdem ist das Stützelement 9 dadurch in seiner Längserstreckung beziehungsweise einer Längserstreckung des Fahrzeugsitzes, wie durch einen Pfeil 19 in Figur 2B angezeigt, verschiebbar, sodass der Abstand der Unterschenkelstütze 6 zum Sitzteil 2 weiter veränderbar ist. Gemäß dem vorliegenden Ausführungsbeispiel ist dem Träger 8 ein Aktuator 20 zugeordnet, der mit dem Quersteg 13 mechanisch gekoppelt ist, um die Schwenkbewegung der Unterschenkelstütze 6 gemäß Pfeil 7 zu automatisieren. Der Aktuator 20 ist beispielsweise als elektromotorischer, pneumatischer und/oder hydraulischer Aktuator ausgebildet, der insbesondere elektrisch ansteuerbar beziehungsweise betätigbar ist.

Weiterhin ist vorteilhafterweise der Unterschenkelstütze 6 ein Aktuator 21 zugeordnet, der gemäß dem vorliegenden Ausführungsbeispiel dazu dient, sowohl die Längsverschiebung des Stützteils 9 gemäß Pfeil 19 als auch die Querverschiebung der Stützteile 10 an dem Stützteil 9 zu bewirken. Dazu ist der Aktuator 21, der bevorzugt ebenfalls als elektromotorisch, pneumatisch und/oder hydraulisch arbeitender Aktuator ausgebildet ist, mit einer Spindelstange 22 gekoppelt, die fest an dem Quersteg 13 einendig gelagert ist und sich in Richtung des Stützteils 9 parallel zu den Stützstreben 18 erstreckt. Der Aktuator 21 weist beispielsweise eine Spindelmutter auf, deren Innengewinde in Eingriff mit dem Außengewinde der Spindelstange 22 steht. Der Aktuator 21 selbst ist vorteilhafterweise fest mit dem Stützteil 9 verbunden beziehungsweise an diesem gelagert, sodass dann, wenn der Aktuator 21 betätigt wird, dieser entlang der Spindelstange 22 gemäß Pfeil 19 bewegt wird und dabei das Stützteil 9 und die daran angeordneten Stützteile 10 entsprechend mitnimmt.

An ihrem von dem Querbolzen 13 abgewandten freien Ende ist die Spindelstange 22 mit zwei Koppelstangen 23 gekoppelt. Diese Koppelstangen 23 sind einendig mit dem freien Ende der Spindelstange 22 und anderendig mit jeweils einem der Stützteile 10 gelenkig verbunden. Dabei schließen die Koppelstangen 23 in der Verstauposition gemäß Figur 2A einen spitzen Winkel mit der Spindelstange 22 in der Draufsicht ein. Wird nun der Aktuator 21 betätigt, so wird mit dem Aktuator 21 das Stützteil 9 von dem Träger 8 wegbewegt. Weil das freie Ende der Spindelstange 22 einen festen Abstand zu dem Träger 8 aufweist, die den Stützteilen 10 zugeordneten Enden der Koppelstangen 23 jedoch mit diesen von dem Träger 8 wegbewegt werden, werden die Koppelstangen 23 aufgespreizt unter Vergrößerung des zuvor mit der Spindelstange 22 eingeschlossenen Winkels, wodurch die Stützteile 10 nach außen zur Verbreiterung der Unterschenkelauflagefläche 11 geschoben werden, sodass die Gebrauchsstellung, wie in Figur 2B gezeigt, erreicht wird. Wird der Aktuator 21 nunmehr umgekehrt angesteuert, sodass das Stützteil 9 in Richtung des Trägers 8 bewegt wird, bewirkt die vorteilhafte Gelenkkinematik des durch Spindelstange 22 und Koppelstangen 23 gebildeten Getriebes 24, dass die Stützteile 10 wieder aufeinander zu bewegt beziehungsweise in Richtung der Verstauposition eingeschoben werden, wodurch die Auflagefläche 11 verschmälert wird.

Dadurch wird mit einem einzelnen Aktuator 21 sowohl die Längsverstellung als auch die Verbreiterung oder Verschmälerung der Unterschenkelauflagefläche 11 der Unterschenkelstütze 5 realisiert.

Alternativ zu dem dargestellten Ausführungsbeispiel können die Stützteile 10 auch durch einen separaten Aktuator bewegt oder angetrieben werden, sodass unabhängig von der Längsverstellung des Stützteils 9 eine Verschmälerung oder Verbreiterung der Unterschenkelauflagefläche 11 einstellbar ist. Auch ist eine aktuatorfreie Ausführung denkbar, bei welcher zumindest die Stützteile 9 und 10 durch den Benutzer manuell in die gewünschte Stellung bewegt werden können.

Insbesondere ist die Kinematik der Unterschenkelstütze 6 beziehungsweise der Unterschenkelstützeinrichtung 5 mit der des Sitzgestells 4 gekoppelt, wie in dem Ausführungsbeispiel von Figur 1 dargestellt. Dadurch erfolgt eine automatische Betätigung oder Teilbetätigung der Unterschenkelstützeinrichtung 5 bei einer Verlagerung des Fahrzeugsitzes 1 von der aufrechten Sitzposition in die in Figur 1 gezeigte Liegeposition und umgekehrt.

### Bezugszeichenliste

- 1: Fahrzeugsitz
- 2: Sitzteil
- 3: Rückenlehne
- 4: Sitzgestell
- 5: Unterschenkelstützeinrichtung
- 6: Unterschenkelstütze
- 7: Doppelpfeil
- 8: Träger
- 9: Stützteil
- 10: Stützteil
- 11: Unterschenkelauflagefläche
- 12: Führungsschiene
- 13: Quersteg
- 14: Bolzenaufnahme
- 15: Doppelpfeil
- 16: Doppelpfeil
- 17: Schienenführung
- 18: Stützstrebe
- 19: Pfeil
- 20: Aktuator
- 21: Aktuator
- 22: Spindelstange
- 23: Koppelstange
- 24: Getriebe

## Patentansprüche

1. Unterschenkelstützeinrichtung (5) für einen Fahrzeugsitz (1), mit einem Träger (8) und mit einer an dem Träger (8) verlagerbar angeordneten Unterschenkelstütze (6), die zwischen einer Nicht-Gebrauchsposition und einer in Längserstreckung vorgelagerten Gebrauchsposition verlagerbar ist, wobei die Unterschenkelstütze (6) zumindest zwei Stützteile (9,10) aufweist, die relativ zueinander bewegbar sind, um eine Unterschenkelauflagefläche (11) der Unterschenkelstütze (6) zu vergrößern oder zu verkleinern, **dadurch gekennzeichnet, dass** die Stützteile (9,10) quer zur Längserstreckung zueinander verlagerbar sind, um die Breite der Unterschenkelauflagefläche (11) zu vergrößern oder zu verkleinern.

2. Unterschenkelstützeinrichtung nach Anspruch 1, **dadurch gekennzeichnet, dass** ein erstes der Stützteile (9) verlagerbar an dem Träger (8) und zumindest ein zweites der Stützteile (10) verlagerbar an dem ersten Stützteil (9) angeordnet ist.

3. Unterschenkelstützeinrichtung nach einem der vorhergehenden Ansprüche, **dadurch gekennzeichnet, dass** an dem ersten Stützteil (9) zwei zweite Stützteile (10) verlagerbar an voneinander abgewandten Seiten des ersten Stützteils (9) angeordnet sind.

4. Unterschenkelstützeinrichtung nach einem der vorhergehenden Ansprüche, **dadurch gekennzeichnet, dass** das zweite Stützteil (10) an dem ersten Stützteil (9) von einer eingeschobenen Verstauposition in eine ausgezogene Nutzposition und umgekehrt verschiebbar ist.

5. Unterschenkelstützeinrichtung nach einem der vorhergehenden Ansprüche, **dadurch gekennzeichnet, dass** das zweite Stützteil (10) an dem ersten Stützteil (9) durch eine Schienenführung (17) verschiebbar gelagert ist.

6. Unterschenkelstützeinrichtung nach einem der vorhergehenden Ansprüche, **gekennzeichnet durch** zumindest einen ansteuerbaren Aktuator (21), der zumindest dem zweiten Stützteil (10) zu dessen Verlagerung zugeordnet ist.

7. Unterschenkelstützeinrichtung nach einem der vorhergehenden Ansprüche, **dadurch gekennzeichnet, dass** der Aktuator (21) durch ein Getriebe (24) mit den zwei zweiten Stützteilen (10) zu deren Verlagerung gekoppelt ist.

8. Unterschenkelstützeinrichtung nach einem der vorhergehenden Ansprüche, **dadurch gekennzeichnet, dass** das erste Stützteil (9) längsverschieblich an dem Träger (8) gelagert ist.

9. Unterschenkelstützeinrichtung nach einem der vorhergehenden Ansprüche, **dadurch gekennzeichnet, dass** dem ersten Stützteil (9) ein ansteuerbarer Aktuator (21) zu seiner Längsverschiebung zugeordnet ist.

10. Unterschenkelstützeinrichtung nach einem der vorhergehenden Ansprüche, **dadurch gekennzeichnet, dass** der fest mit dem ersten Stützteil (9) verbundene Aktuator (21) mit einer Spindelstange (22) gekoppelt ist, die einendig an dem Träger (8) befestigt ist, wobei der Aktuator (21) durch seine Ansteuerung entlang der Spindelstange (22) verschiebbar ist.

11. Unterschenkelstützeinrichtung nach einem der vorhergehenden Ansprüche, **dadurch gekennzeichnet, dass** die Spindelstange (22) anderendig mit zumindest einer mit einem der zweiten Stützteile (10) insbesondere gelenkig verbundenen Koppelstange (23) gelenkig verbunden ist, wobei die jeweilige Koppelstange (23) mit der Spindelstange (22) in der eingeschobenen Verstauposition einen spitzen Winkel einschließt.

12. Unterschenkelstützeinrichtung nach einem der vorhergehenden Ansprüche, **dadurch gekennzeichnet, dass** das erste Stützteil (9) an dem Träger (8) verschwenkbar gelagert ist.

13. Unterschenkelstützeinrichtung nach einem der vorhergehenden Ansprüche, **dadurch gekennzeichnet, dass** dem Träger (8) ein Aktuator (20) zum Verschwenken des ersten Stützteils (9) zugeordnet ist.

14. Fahrzeugsitz (1) für ein Kraftfahrzeug, mit einem Sitzteil (2), mit einer dem Sitzteil (2) zugeordneten Rückenlehne (3) und mit einer an dem Sitzteil (2) angeordneten Unterschenkelstützeinrichtung (5), **gekennzeichnet durch** die Ausbildung der Unterschenkelstützeinrichtung (5) nach einem der Ansprüche 1 bis 13.

## Claims

1. Lower leg support device (5) for a vehicle seat (1), having a carrier (8) and a lower leg support (6) which is arranged shiftably on the carrier (8) and is shiftable between a non-operational position and an operational position situated in front in the longitudinal extent, wherein the lower leg support (6) has at least two support parts (9, 10) which are moveable relative to each other in order to increase or to reduce a lower leg bearing surface (11) of the lower leg support (6), **characterized in that** the support parts (9, 10) are shiftable relative to each other transversely with respect to the longitudinal extent in order to increase or to reduce the width of the lower leg bearing surface (11).

2. Lower leg support device according to Claim 1, **characterized in that** a first of the support parts (9) is arranged shiftably on the carrier (8) and at least a second of the support parts (10) is arranged shiftably on the first support part (9).

3. Lower leg support device according to either of the preceding claims, **characterized in that**, on the first support part (9), two second support parts (10) are arranged shiftably on mutually remote sides of the first support part (9).

4. Lower leg support device according to one of the preceding claims, **characterized in that** the second support part (10) is displaceable on the first support part (9) from a pushed-in stowage position into an extended use position, and vice versa.

5. Lower leg support device according to one of the preceding claims, **characterized in that** the second support part (10) is mounted displaceably on the first support part (9) by means of a rail guide (17).

6. Lower leg support device according to one of the preceding claims, **characterized by** at least one activatable actuator (21) which is assigned at least to the second support part (10) for the shifting thereof.

7. Lower leg support device according to one of the preceding claims, **characterized in that** the actuator (21) is coupled by a gearing (24) to the two second support parts (10) for the shifting thereof.

8. Lower leg support device according to one of the preceding claims, **characterized in that** the first support part (9) is mounted in a longitudinally displaceable manner on the carrier (8).

9. Lower leg support device according to one of the preceding claims, **characterized in that** an activatable actuator (21) is assigned to the first support part (9) for the longitudinal displacement thereof.

10. Lower leg support device according to one of the preceding claims, **characterized in that** the actuator (21) which is connected fixedly to the first support part (9) is coupled to a spindle rod (22) which is fastened at one end to the carrier (8), wherein the actuator (21) by activation thereof is displaceable along the spindle rod (22) .

11. Lower leg support device according to one of the preceding claims, **characterized in that** the spindle rod (22) is connected in an articulated manner at the other end to at least one coupling rod (23) which is connected in particular in an articulated manner to one of the second support parts (10), wherein the respective coupling rod (23) encloses an acute angle with the spindle rod (22) in the pushed-in stowage position.

12. Lower leg support device according to one of the preceding claims, **characterized in that** the first support part (9) is mounted pivotably on the carrier (8).

13. Lower leg support device according to one of the preceding claims, **characterized in that** an actuator (20) for pivoting the first support part (9) is assigned to the carrier (8).

14. Vehicle seat (1) for a motor vehicle, having a seat part (2), having a backrest (3) assigned to the seat part (2) and having a lower leg support device (5) which is arranged on the seat part (2), **characterized by** the design of the lower leg support device (5) according to one of Claims 1 to 13.

## Revendications

1. Dispositif repose-jambes (5) pour un siège de véhicule (1), comprenant un support (8) et un repose-jambes (6) agencé de manière déplaçable sur le support (8), qui peut être déplacé entre une position de non-utilisation et une position d'utilisation avancée dans l'extension longitudinale, le repose-jambes (6) présentant au moins deux parties de soutien (9, 10) qui sont mobiles l'une par rapport à l'autre afin d'agrandir ou de réduire une surface d'appui de jambes (11) du repose-jambes (6), **caractérisé en ce que** les parties de soutien (9, 10) peuvent être déplacées l'une par rapport à l'autre transversalement à l'extension longitudinale afin d'agrandir ou de réduire la largeur de la surface d'appui de jambes (11).

2. Dispositif repose-jambes selon la revendication 1, **caractérisé en ce qu'**une première des parties de soutien (9) est agencée de manière déplaçable sur le support (8) et au moins une deuxième des parties de soutien (10) est agencée de manière déplaçable sur la première partie de soutien (9).

3. Dispositif repose-jambes selon l'une quelconque des revendications précédentes, **caractérisé en ce que** deux deuxièmes parties de soutien (10) sont agencées de manière déplaçable sur la première partie de soutien (9) sur des côtés détournés l'un de l'autre de la première partie de soutien (9).

4. Dispositif repose-jambes selon l'une quelconque des revendications précédentes, **caractérisé en ce que** la deuxième partie de soutien (10) peut être coulissée sur la première partie de soutien (9) d'une position de rangement rétractée à une position d'utilisation déployée et inversement.

5. Dispositif repose-jambes selon l'une quelconque des revendications précédentes, **caractérisé en ce que** la deuxième partie de soutien (10) est montée de manière coulissante sur la première partie de soutien (9) par un guidage à rail (17).

6. Dispositif repose-jambes selon l'une quelconque des revendications précédentes, **caractérisé par** au moins un actionneur commandable (21) qui est associé au moins à la deuxième partie de soutien (10) pour son déplacement.

7. Dispositif repose-jambes selon l'une quelconque des revendications précédentes, **caractérisé en ce que** l'actionneur (21) est couplé par une transmission (24) aux deux deuxièmes parties de soutien (10) pour leur déplacement.

8. Dispositif repose-jambes selon l'une quelconque des revendications précédentes, **caractérisé en ce que** la première partie de soutien (9) est montée de manière coulissante longitudinalement sur le support (8).

9. Dispositif repose-jambes selon l'une quelconque des revendications précédentes, **caractérisé en ce que** la première partie de soutien (9) est associée à un actionneur commandable (21) pour son coulissement longitudinal.

10. Dispositif repose-jambes selon l'une quelconque des revendications précédentes, **caractérisé en ce que** l'actionneur (21) relié de manière fixe à la première partie de soutien (9) est couplé à une tige de broche (22) qui est fixée à une extrémité au support (8), l'actionneur (21) pouvant être coulissé le long de la tige de broche (22) par sa commande.

11. Dispositif repose-jambes selon l'une quelconque des revendications précédentes, **caractérisé en ce que** la tige de broche (22) est reliée de manière articulée à l'autre extrémité avec au moins une tige de couplage (23) reliée notamment de manière articulée à l'une des deuxièmes parties de soutien (10), la tige de couplage (23) respective formant un angle aigu avec la tige de broche (22) dans la position de rangement rétractée.

12. Dispositif repose-jambes selon l'une quelconque des revendications précédentes, **caractérisé en ce que** la première partie de soutien (9) est montée de manière pivotante sur le support (8).

13. Dispositif repose-jambes selon l'une quelconque des revendications précédentes, **caractérisé en ce qu'**un actionneur (20) est associé au support (8) pour faire pivoter la première partie de soutien (9).

14. Siège de véhicule (1) pour un véhicule automobile, comprenant une partie d'assise (2), un dossier (3) associé à la partie d'assise (2) et un dispositif repose-jambes (5) agencé sur la partie d'assise (2), **caractérisé par** la configuration du dispositif repose-jambes (5) selon l'une quelconque des revendications 1 à 13.
